# EUROPEAN PATENT APPLICATION

(11) **EP 1 293 874 A2**
(43) Date of publication of application: **19.03.2003**
(21) Application number: 02090318.3
(22) Date of filing: 05.09.2002
(51) Int. Cl.: G06F 1/00

(54) **Authentication method, authentication system, and authentication token**

(30) Priority: 06.09.2001 JP 2001270947; 21.06.2002 JP 2002181406
(71) Applicant: Nippon Telegraph and Telephone Corporation, Tokyo 100-8116 (JP)
(72) Inventor: Shigematsu, Satoshi, NTT Intellec. Property Center, Musashino-shi, Tokyo 180-8585 (JP); Hatano, Takahiro, NTT Intellectual Property Center, Musashino-shi, Tokyo 180-8585 (JP); Suto, Hiroki, NTT Intellectual Property Center, Musashino-shi, Tokyo 180-8585 (JP); Okazaki, Yukio, NTT Intellectual Property Center, Musashino-shi, Tokyo 180-8585 (JP); Kyuragi, Hakaru, NTT Intellectual Property Center, Musashino-shi, Tokyo 180-8585 (JP)
(74) Representative: Patentanwälte Wenzel & Kalkoff

(57) **Abstract**

An authentication method includes first, second, and third steps. In the first step, a biometrical information sensor reads biometrical information of a user. In the second step, the read biometrical information is collated with registered biometrical information in a registration memory. When the collation result represents that collation has successfully been done, user unique information from an authentication information output section is converted into an emulator signal corresponding to a service provided by a use device. The emulator signal is transmitted to the use device. In the third step, the use device provides the service to the user on the basis of the received emulator signal. An authentication system and authentication token are also disclosed.

## Description

### Background of the Invention

The present invention relates to an authentication method, authentication system, and authentication token, which certify using user biometrical information that a user who will receive a given service is an authentic user, and provide the service to the user.

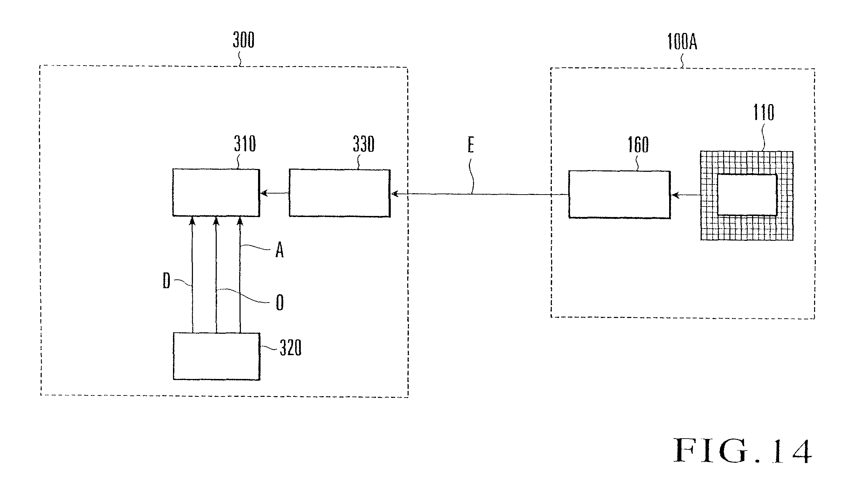

Some devices such as PCs (Personal Computers) or cell phones have an authentication function for certifying using user biometrical information that a user is authentic and providing various kinds of services to the user. Fig. 14 shows an example of a system having such an authentication function. A sensor unit 100A having a sensor 110 for reading user biometrical information is connected to a use device 300 serving as a service providing device such as a PC or cell phone. A processing unit 310 such as a processor or microcomputer mounted in the use device 300 authenticates on the basis of sensing data E read by the sensor unit 100A whether a user is an authentic user. If the user is authentic, a service is provided to the user.

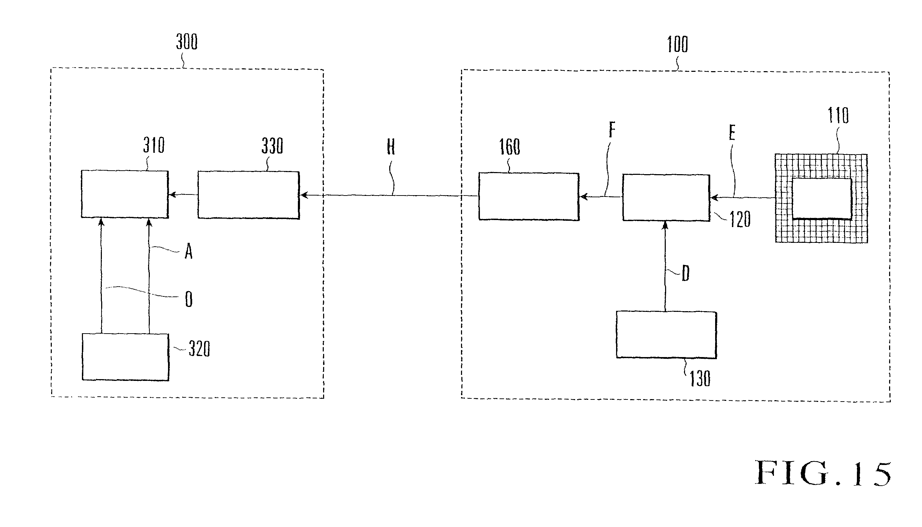

Another example of a system having an authentication function of this kind has also been provided in which the authentication unit (authentication token 100) of a user is connected to a use device 300 for providing a service to a user, the user is authenticated in the authentication unit using biometrical information, and the authentication result is transmitted to the use device 300, as shown in Fig. 15. In this authentication system, user registration information is stored in the authentication unit of an individual user. Operations ranging from reading to collation of biometrical information are executed in the authentication unit. Only an authentication result (communication data H) obtained by this collation is transmitted to the use device 300. The use device 300 provides a service on the basis of this information.

In the authentication system shown in Fig. 14, user biometrical information is collated by the processing unit 310 in the use device 300. To do this, authentication software O and user registration data D must be installed in a storage circuit 320 in the use device 300. However, many use devices such as PCs or cell phones that are already widely proliferating have neither authentication software O nor registration data D. To introduce an authentication system based on biometrical information, authentication software and registration data must be installed in such a device in advance. This impedes introduction of an authentication system of this type.

On the other hand, in the authentication system shown in Fig. 15, biometrical information is collated in the authentication unit of a user. Hence, neither collation software nor user registration data need be installed in the use device 300. However, since the authentication unit side transmits to the use device 300 the communication data H (authentication result) representing whether the user is authentic, the use device 300 must have in advance software dedicated for the authentication unit, which receives the communication data, determines whether the communication data H is authentic data, and causes the use device to start providing a service. Alternatively, the service providing software A installed in the use device 300 must be changed such that it operates in accordance with the communication data H from the authentication unit. For this purpose, software for an authentication unit must be installed in all use devices to be used by a user, resulting in difficulty in introducing the authentication system.

### Summary of the Invention

The invention has been made in consideration of the above problems, and has as its object to make it possible to introduce an authentication system based on biometrical information without installing dedicated software in a general use device already used by a user.

In order to achieve the above object, according to the invention, there is provided an authentication method comprising a first step of causing a biometrical information sensor to read biometrical information of a user, a second step of collating the biometrical information read on the basis of processing of the first step with registered biometrical information in a registration memory, and when a collation result represents that collation has successfully been done, converting user unique information from an authentication information output section into an emulator signal corresponding to a service provided by a use device and transmitting the emulator signal to the use device, and a third step of causing the use device to provide the service to the user on the basis of the emulator signal transmitted by processing of the second step.

### Brief Description of the Drawings

Fig. 1 is a block diagram showing first to third, eighth, and ninth embodiments of a biometrical information authentication system according to the invention;
Fig. 2 is a block diagram showing a fourth embodiment of the system;
Fig. 3 is a block diagram showing a fifth embodiment of the system;
Fig. 4 is a block diagram showing a sixth embodiment of the system;
Fig. 5 is a block diagram showing a seventh embodiment of the system;
Fig. 6 is a view showing the eighth embodiment of the system;
Fig. 7 is a block diagram showing a 10th embodiment of the system;
Fig. 8 is a block diagram showing an 11th embodiment of the system;
Fig. 9 is a view showing user information registration situation for each registered biometrical information in the system shown in Fig. 8;
Fig. 10 is a view showing the first registration operation of user information in the system shown in Fig. 8;
Fig. 11 is a view showing the second registration operation of user information in the system shown in Fig. 8;
Fig. 12 is a flow chart showing the main operation of the system shown in Fig. 8;
Fig. 13 is a view showing a second example for the addition of an index counter for instructing output of user information registered in the system shown in Fig. 8;
Fig. 14 is a block diagram showing the arrangement of a conventional system; and
Fig. 15 is a block diagram showing the arrangement of another conventional system.

### Description of the Preferred Embodiments

The invention will be described with reference to the accompanying drawings.

### (First Embodiment)

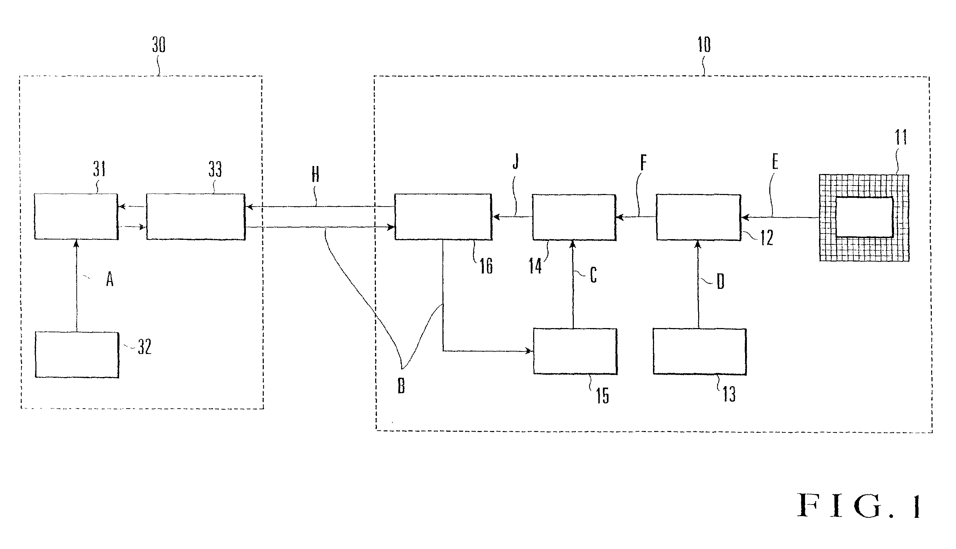

Fig. 1 shows a first embodiment of a biometrical information authentication system according to the invention. As shown in Fig. 1, this system is formed from a use device 30 for providing a service to a user and an authentication token 10 of the user.

The authentication token 10 comprises a sensor 11 for reading biometrical information, a registration memory 13 for holding registered biometrical information data (registration data D) of the user who has the authentication token, a user memory 15 for holding user information, a collation circuit 12 for comparing and collating biometrical information data (sensing data E) read by the sensor 11 with the registered biometrical information data held in the registration memory 13, a keyboard emulator 14 for converting user data (user information C) output from the user memory 15 into a touch signal J of a keyboard on the basis of collation data F from collation circuit 12, and a communication circuit 16 for transmitting the touch signal J output from keyboard emulator 14 to the outside of the authentication token 10, receiving registration user data B transmitted from use device 30, and outputting registration user data B to the user memory 15.

On the other hand, use device 30 is a device such as a PC or cell phone and comprises a communication circuit 33 for receiving the communication data H representing an authentication result from the authentication token 10, a processing unit 31 for providing a service to the user on the basis of the authentication result received by the communication circuit 33, and a storage circuit 32 for storing service software A corresponding to the service to be provided, which is executed by processing unit 31.

The user makes in advance the authentication token 10 of his own store registered biometrical information data of his own and/or user information such as a password necessary for use of a service. When the user wants to use device 30, he connects the authentication token 10 of his own to device 30 directly or indirectly via a radio wave or infrared rays, and then sensor 11 reads his biometrical information. The collation circuit 12 collates the registered biometrical information data D registered in memory 13 in advance with the biometrical information data (sensing data E) read by sensor 11 and outputs the result to keyboard emulator 14 as the collation data F.

If the collation result from collation circuit 12 indicates that collation has successfully been done, keyboard emulator 14 converts user information C (information unique to the user, including identification information used to identify the user) such as a password output from user memory 15 into the touch signal J of the keyboard and transmits touch signal J to the use device 30 through communication circuit 16 as communication data H. The communication circuit 33 in device 30 includes a general-purpose connector for connecting the keyboard and the like, such as a USB, serial, radio, or infrared connector, and a communication circuit. The touch signal J from authentication token 10 connected to communication circuit 33 is interpreted as if the signal were a touch signal transmitted from a keyboard that should originally be connected, and transmitted to processing unit 31.
This interprets the signal transmitted from the communication circuit 33 as a signal from the keyboard and executes processing corresponding to the key input.

When the state of device 30 is a password input receiving state in providing a service, and the touch signal J transmitted from the authentication token 10 represents a password corresponding to this user, processing unit 31 of use device 30 interprets that the password is input from an externally connected keyboard. The unit 31 executes the service software A in the storage circuit 32, thereby collating the input password as if it were a password input by the user through a keyboard. If it is determined that the user is an authentic user, the service software A is executed to provide the service to the user.

As described above, in this authentication system, the signal from token 10 is the same as a password that is actually input by the user from a keyboard. Hence, processing unit 31 can authenticate the user by the same processing as the conventional password collation. For this reason, use device 30 needs to have no software dedicated for the authentication token. The service program (service software A) of device 30 need not be improved for the authentication token, either. That is, an authentication system based on biometrical information can easily be introduced without newly installing or changing software in a conventional authentication system using a password.

When not only a password but also a user ID or the like is transmitted as user information, the convenience can be increased because no keyboard input is necessary in user authentication. In addition, since authentication token 10 automatically transmits the user ID or password, the user need not memorize these pieces of information, so convenience can further be increased. Simultaneously, a meaningless long password the user cannot memorize can also individually be set for each service while being frequently updated. Problems in a conventional authentication system using a password that a character string easy to memorize is used as a password, or various services share one password without updating it can also be solved. Hence, a system with high security can be built.

New registration of user information in authentication token 10 or correction/addition of user information registered in token 10 can be done by transmitting the registration user information B from use device 30 having dedicated software to token 10. In this case, upon receiving the registration user information B, token 10 executes processing of, e.g. registering user information in user memory 15 or updating the user information in memory 15 on the basis of the received registration user information B.

To do such processing, a use device having dedicated software is necessary. However, since this processing is not usual and is necessary only to change the user information, token 10 needs to be connected to a use device capable of this processing only at such time. Since this processing is very unusual as compared to normal authentication processing in providing a service, the convenience for the user is rarely decreased. In addition, even for a service for such user information registration processing, instead of arbitrarily rewriting the user information, only the user who is permitted to rewrite the user information is allowed to register the user information using a dedicated use device by introducing user authentication by biometrical information using authentication token 10. Hence, a system with higher safety can be built.

In this embodiment, registration memory 13 for storing the registered biometrical information data of the user and user memory 15 for storing biometrical information are separate . However, these memories may be integrated into one memory.

### (Second Embodiment)

The arrangement of a biometrical information authentication system according to the second embodiment is almost the same as that of the first embodiment shown in Fig. 1 except that a communication circuit 16 of an authentication token 10 has a first memory (not shown) to store a number unique to token 10, and when the latter is connected to a use device 30, the unique number of token 10 is transmitted from communication circuit 16 to use device 30.

In the system of this embodiment, when the user who has token 10 will receive a service from device 30, he connects token 10 of his own to device 30. First, communication circuit 16 in authentication token 10 transmits the unique number of token 10, which is stored in the first memory, to use device 30. The device 30 searches a database (second memory) (not shown) arranged in a communication circuit 33 or storage circuit 32 for the received unique number to check whether the unique number is an already registered number. If the unique number of token 10 is already registered, authentication using user biometrical information is executed by the same means as that described in the first embodiment, and a service corresponding to the authentication result is provided from the use device 30 side. If the unique number of authentication token 10 is not registered, device 30 refuses communication with token 10 and invalidates connection by token 10.

According to this embodiment, connection to the use device by an authentication token whose use is not permitted can be prevented. Hence, any access from a user who is not permitted to use the use device or illicit use of the authentication token by a third party can be prevented. In addition, since access using a pseudo authentication token for a purpose of illicit use of the use device can also be refused, more secure service providing can be executed. Furthermore, when a device (alarm device) which indicates illicit use or a device which notifies the police of illicit use is mounted in the use device, any crime can also be prevented.

Alternatively, a level may be set for the unique number of the authentication token. When the unique number is collated in communication circuit 33 of the use device, and the numbers do not completely coincide, collation may be executed in accordance with the level of the unique number, and only communication of a touch signal may be permitted, or all communications may be made possible. When one authentication token is registered in the use device in correspondence with a plurality of authentication tokens of a given user group, each user can receive the service from the use device even when an unregistered authentication token of that group is used.

### (Third Embodiment)

The arrangement of a biometrical information authentication system according to the third embodiment is almost the same as that of the first embodiment shown in Fig. 1 except that a communication circuit 33 of a use device 30 has a first memory (not shown) to store a number unique to device 30, and when an authentication token 10 is connected to device 30, the unique number of device 30 is transmitted from communication circuit 33 to token 10.

In the system of this embodiment, when the user who has authentication token 10 will receive a service from use device 30, he connects token 10 of his own to device 30. First, communication circuit 33 in device 30 transmits the unique number of device 30, which is stored in the first memory, to token 10 , which searches a database (second memory) (not shown) arranged in a communication circuit 16 or user memory 15 for the received unique number to check whether the unique number is an already registered number. If the unique number of use device 30 is already registered, authentication using user biometrical information is executed by the same means as that described in the first embodiment, and a service corresponding to the authentication result is provided from device 30 side. If the unique number of device 30 is not registered, token 10 refuses communication with device 30 and invalidates connection thereto.

According to this embodiment, connection of an authentication token to the use device, use of which is not registered by the user in advance, can be prevented. Hence, even if the authentication token is lost, any illicit connection of the authentication token to the use device by a third party can be prevented. In addition, when the same processing as in this embodiment is performed in registering user information and the like in the authentication token, any illicit alteration of the data in the authentication token and information read by a third party can be prevented. When this embodiment is combined with the above-described second embodiment, any illicit use of the authentication token and alteration of registered data can be prevented.

A level may be set for the unique number of the use device. When the unique number is collated in communication circuit 16 of the authentication token, and the numbers do not completely coincide, collation may be executed in accordance with the level of the unique number, and only communication of a touch signal may be permitted, or all communications may be made possible. Accordingly, even when, for example, one service provider has a plurality of service providing apparatuses, registration for one apparatus to token of a user suffices that the user can receive the same service from even unregistered apparatuses.

### (Fourth Embodiment)

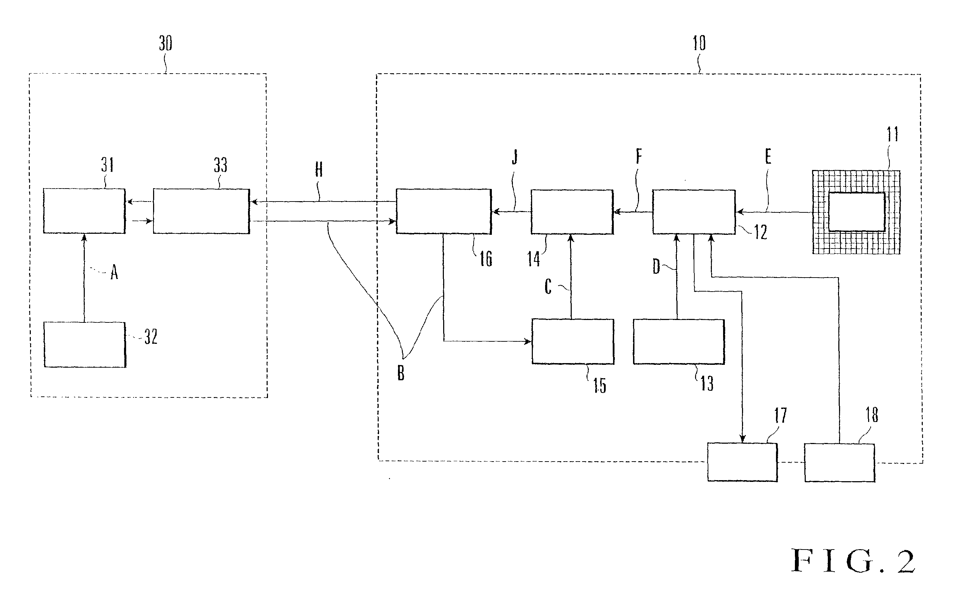

Fig. 2 shows a fourth embodiment of the biometrical information authentication system. This embodiment is different from the above-described first embodiment in that a lamp 17 that lights in accordance with a signal from a collation circuit 12 and a switch 18 which outputs an ON/OFF state to the collation circuit 12 are added to an authentication token 10. In the system of this embodiment, a user presses switch 18 to instruct collation circuit 12 to start authentication. In this case, circuit 12 indicates the biometrical information read period in a sensor 11 by lighting lamp 17. Then, circuit 12 collates the user biometrical information read by sensor 11 during this read period with registration data in a registration memory 13. In the second embodiment, the user can instruct authentication token 10 to start authentication, or token 10 can notify the user of the biometrical information read period by lighting lamp 17.

In the system of the fourth embodiment, when token 10 is always connected to a use device 30, token 10 can be activated only when authentication is necessary by pressing switch 18. Otherwise, a sleep mode wherein no operation is performed can be set. Hence, the power consumption of token 10 can be reduced. In addition, since circuit 12 can notify the user of the biometrical information read period in sensor 11 by lighting lamp 17, the user can know a timing at which his biometrical information is to be read, so a system more easy to use can be implemented.

### (Fifth Embodiment)

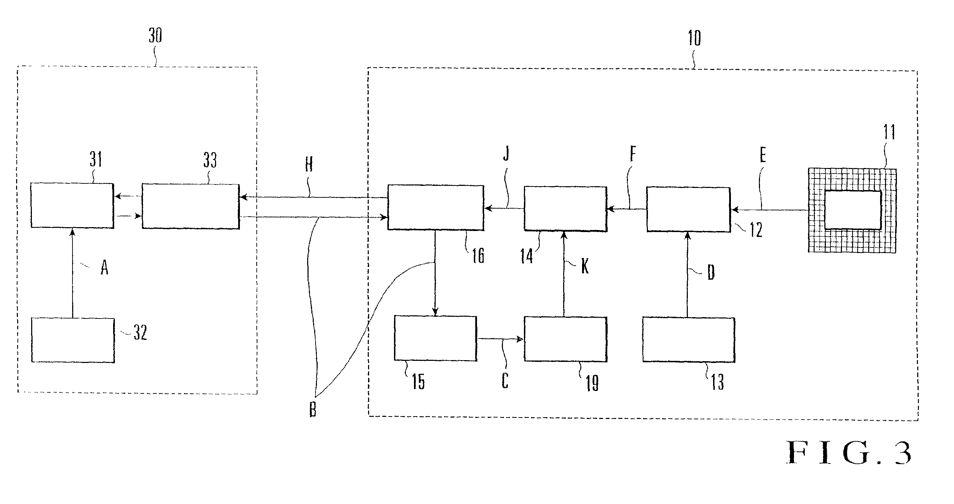

Fig. 3 shows a fifth embodiment of the biometrical information authentication system, which is different from the above-described first embodiment in that user information C output from a user memory 15 in an authentication token 10 is input to a keyboard emulator 14 through an encryption unit 19. This encrypts user information C registered in user memory 15 and sends it to the keyboard emulator 14 as encrypted information K. When collation has successfully been done, emulator 14 transmits information K to a use device 30 through a communication circuit 16 as a touch signal J. A processing unit 31 in use device 30 decrypts the encrypted information K and collates it with a registered password, thereby realizing authentication for a service. Accordingly, even when the contents of communication between authentication token 10 and device 30 or the contents of information output from the authentication token 10 are read by a third party, any copy of token 10 or illicit use of the service can be prevented.

### (Sixth Embodiment)

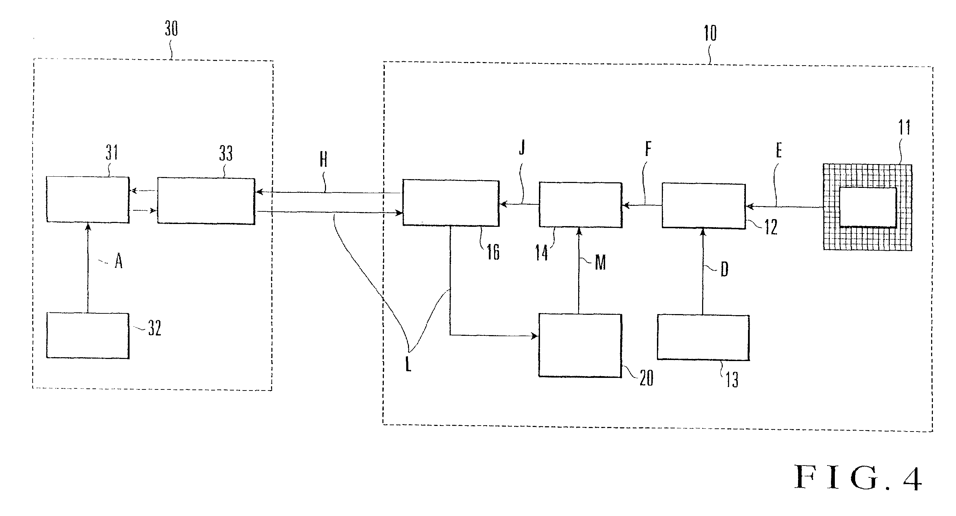

Fig. 4 shows a sixth embodiment of the biometrical information authentication system, which is different from the above-described first embodiment in that a password generation unit 20 is arranged in place of a user memory 15 in an authentication token 10, and a password M generated by the password generation unit 20 is input to a keyboard emulator 14.

In the sixth embodiment, every time authentication is executed, password generation unit 20 generates a password using dynamic information such as time or predetermined sequence data. When collation has successfully been done, keyboard emulator 14 transmits password M to a use device 30 through a communication circuit 16 as a touch signal J. A processing unit 31 in device 30 generates a password on the basis of the same information as that used by password generation unit 20 in token 10. When this password coincides with the password transmitted from token 10, authentication is successful, and a service is provided to the user.

Since the password transmitted from authentication token 10 changes every time, a third party who has stolen by wiretapping data sent from authentication token 10 cannot pose as an authentic user. Hence, a more secure authentication system can be built. In addition, information (password generation information L) used by password generation unit 20 to generate a password can be transmitted to unit 20 and updated in accordance with the same procedure as the method of updating user information C in the first embodiment.

### (Seventh Embodiment)

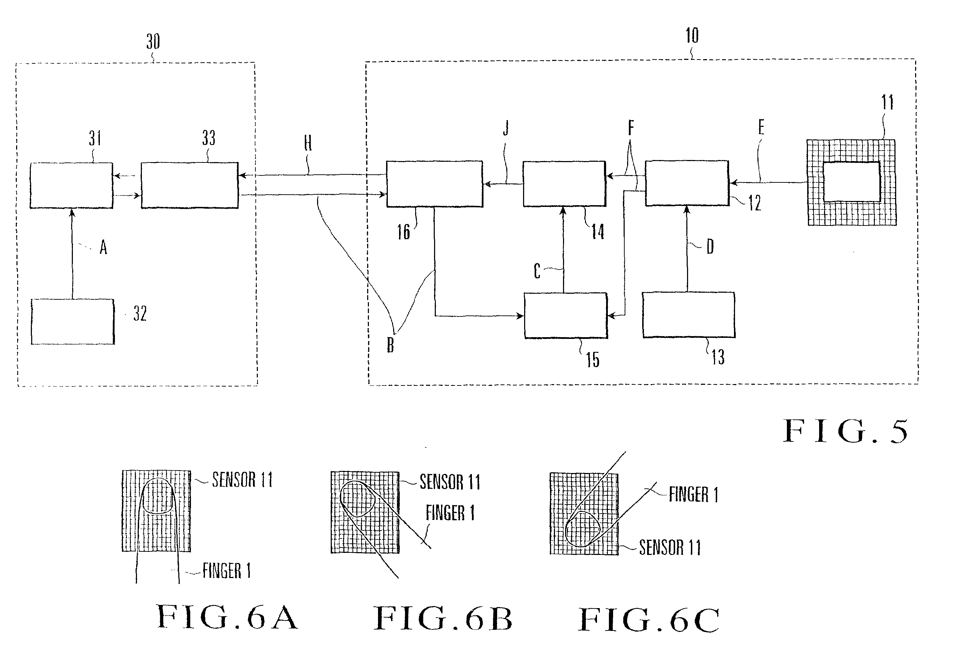

Fig. 5 shows the seventh embodiment of the biometrical information authentication system, which is different from the first embodiment in that a collation circuit 12 in an authentication token 10 transmits collation data F to a user memory 15, too, and memory 15 permits access to itself only when the collation data F indicates that collation has successfully been done.

In the seventh embodiment, user information C stored in the user memory 15 can be updated from a use device 30, as in the first embodiment. However, if collation data F from collation circuit 12, which is transmitted to user memory 15, does not indicate that collation has successfully been done, user memory 15 does not permit update of information stored therein or addition of information to itself. That is, user information C can be updated only when the user who is the owner of authentication token 10 executes authentication using biometrical information, and it certifies that the user is the authentic user. With this arrangement, even a manager who is permitted to update user information C cannot update the information in user memory 15 in token 10 unless the owner of token 10 permits. Hence, a more secure system can be built.

### (Eighth Embodiment)

The system arrangement of the eighth embodiment is almost the same as that of the first embodiment shown in Fig. 1 except that registered biometrical information data corresponding to a plurality of pieces of biometrical information of a user is stored in a registration memory 13, and a plurality of pieces of user information C are stored in a user memory 15.

In the eighth embodiment, when a collation circuit 12 collates biometrical information data read by a sensor 11 with registered biometrical information data in registration memory 13, collation is executed for a plurality of pieces of registered biometrical information data registered in registration memory 13. If it is determined that data are identical, the result and information of the used registered biometrical information data are transmitted to a keyboard emulator 14 as collation data. The emulator 14 selects, from a plurality of pieces of user information output from user memory 15, user information corresponding to the selected registered biometrical information data in registration memory 13, and transmits a touch signal J corresponding to the user information to a use device 30 through a communication circuit 16.

Assume that biometrical information is a fingerprint. The user stores fingerprint data of his plurality of fingers in memory 13 as registered biometrical information data, and registers user information C such as passwords corresponding to the fingers in memory 15. When the user wants to receive a service, he causes sensor 11 to read the fingerprint of a finger corresponding to the service or use device. The collation circuit 12 performs collation. If collation has successfully been done, a service corresponding to the user or a password corresponding to the finger is transmitted to the use device. Accordingly, the user can selectively use the user information such as passwords for a plurality of use devices or services.

An example in which a plurality of fingers is selectively used for fingerprints has been described above. Instead, the user may select user information to be transmitted using the direction of a finger placed on sensor 11.

Alternatively, user information may be selected by combining the type of finger described above with the direction of a finger placed on the sensor. More specifically, as shown in Figs. 6A to 6C, the user places a finger on sensor 11 in various directions. The collation circuit 12 detects the direction of the placed finger and transmits the detection result to keyboard emulator 14 together with collation data. The emulator 14 loads user information corresponding to a predetermined finger placing direction from memory 15 and transmits the touch signal J corresponding to the user information to use device 30. With this operation, data to be transmitted to device 30 can be selected.

Also, collation by circuit 12 may be executed a plurality of number of times, and user information to be transmitted may be selected in the order of registered biometrical information data used for the collation. If a fingerprint is to be used, a plurality of fingers may be sequentially placed on sensor 11 and collated, and user information to be transmitted may be selected in accordance with the order of placing the fingers. If the directions of finger placing are combined, the number of user information can be further increased. In this embodiment, a fingerprint is used as biometrical information, though it also applies to any other biometrical information.

### (Ninth Embodiment)

The system arrangement of a ninth embodiment is almost the same as that of the first embodiment shown in Fig. 1. In the first embodiment, an authentication token 10 transmits a password or the like to receive a service use permission. In the ninth embodiment, however, a signal for operating a use device 30 or arbitrary data registered by a user in advance is transmitted to device 30. For example, information such as the user name or e-mail address is stored in a user memory 15 of authentication token 10. When authentication using user biometrical information has successfully been done, token 10 transmits the information to device 30 as if it were input by the user from a keyboard. That is, when information or operation procedures used very frequently are registered in token 10, the information can easily be transmitted to a processing unit 31 in device 30. Hence, the convenience in service use can be increased.

### (10th Embodiment)

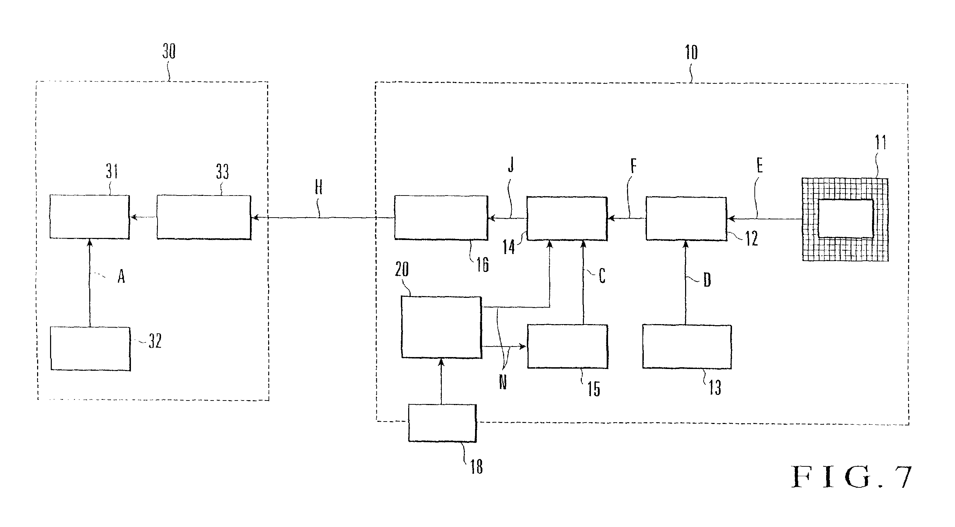

Fig. 7 shows a 10th embodiment of the biometrical information authentication system. The 10th embodiment is different from the first embodiment in that an authentication token 10 incorporates a password generation unit 20 for generating a password using random numbers or the like and a switch 18, the password generated by password generation unit 20 is input to a keyboard emulator 14 and user memory 15, and the output from the switch 18 is input to the password generation unit 20.

Propagation of registration user information is the same as in the first embodiment, though it is not illustrated in Fig. 7. Operations of authenticating a user and registering biometrical information or user information are also the same as in the first embodiment.

In the 10th embodiment, the password generation unit 20 is used. When the user presses switch 18, a signal is output to unit 20, which generates a new password N and transmits it to keyboard emulator 14 and user memory 15.

Emulator 14 converts the received new password N into a touch signal J and transmits it to a use device 30 through a communication circuit 16. The user memory 15 stores the received new password N as a new password or updates the previous password to the new password N.

In the first embodiment and the like, the password to be stored in token 10 is transmitted from use device 30 side and then stored in token 10. In some general services, however, new password setting or password updating is done by causing a user to input a new password. The arrangement of the 10th embodiment corresponds to such a system. When the user is requested to input a new password in receiving a service from use device 30, the user presses switch 18 of token 10. The new password N is generated by password generation unit 20 and transmitted from emulator 14 to device 30 as if the new password were input by the user.

Accordingly, in newly registering or updating a password, the user can generate and register a password with high randomness without devising a password. This facilitates a frequent password change and the like and increases the convenience and safety of the system.

In the 10th embodiment, the user notifies, by using switch 18, the password generation unit 20 of the transmission timing of the new password. Instead, unit 20 may generate and output a new password using a signal from use device 30. In this case, new password setting or password updating can automatically be done without causing the user to operate switch 18.

### (11th Embodiment)

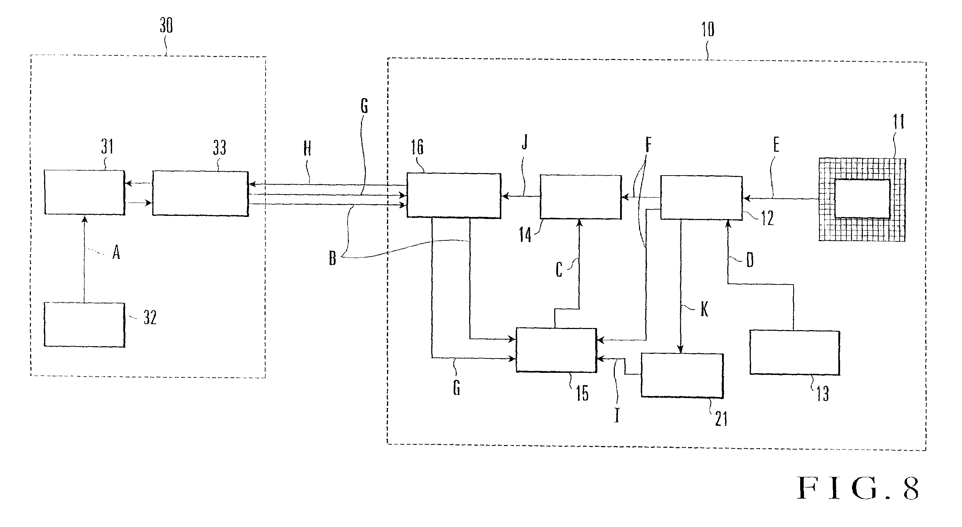

Fig. 8 shows an 11th embodiment of the biometrical information authentication system. This system is formed from an authentication token 10 and use device 30. The token 10 comprises a sensor 11 for reading biometrical information, a registration memory 13 for holding registered biometrical information data (registration data D) of the user who has the authentication token, a user memory 15 for holding user information, a collation circuit 12 for comparing and collating biometrical information data (sensing data E) read by sensor 11 with the registered biometrical information data held in registration memory 13, a keyboard emulator 14 for converting user information (user information C) output from user memory 15 into a touch signal J of a keyboard on the basis of collation data F from circuit 12, and a communication circuit 16 for transmitting touch signal J output from emulator 14 to device 30 as communication data H, receiving registration user information B transmitted from use device 30, and outputting the registration user information B to memory 15.

This system can assign a plurality of pieces of user information identifiable by indices to one registered biometrical information. For this purpose, in authentication token 10, communication circuit 16 outputs registration index information G to memory 15 together with registration user information B, and an information pair is registered in user memory 15. In addition, an index counter 21 is arranged. The value of counter 21 is incremented by an index addition signal K which is output from collation circuit 12 when it is determined as a result of collation of biometrical information that coincident biometrical information is index-corresponding registered biometrical information. The counter value is sent to memory 15 as index information I.

Memory 15 outputs user information designated by index information I and collation data F to keyboard emulator 14.

On the other hand, use device 30 is a device such as a PC or cell phone and comprises a communication circuit 33 for receiving the communication data H representing user information from authentication token 10, a processing unit 31 for providing a service to the user on the basis of the user information received by communication circuit 33, and a storage circuit 32 for storing service software A corresponding to the service to be provided, which is executed by processing unit 31.

The user, in advance, makes token 10 of his own store registered biometrical information data of his own and/or user information such as a password necessary for use of a service. When the user wants to use device 30, he connects token 10 of his own to use device 30 directly or indirectly via a radio wave or infrared rays, and then sensor 11 reads his biometrical information. The circuit 12 collates the registered biometrical information data D registered in registration memory 13 in advance with the biometrical information data (sensing data E) read by sensor 11. If the collation result indicates that the pieces of information coincide, and collation has successfully been done, the result is output to emulator 14 and user memory 15 as collation data F. When the collation result represents that the biometrical information is predetermined index-corresponding registered biometrical information, index addition signal K is output to index counter 21 to increment the value of counter 21, as described above.

On the basis of collation data F representing the coincident biometrical information collated by circuit 12 and index information I representing the value of counter 21, emulator 14 converts the user information C (information unique to the user, including identification information used to identify the user) such as a password output from memory 15 into the touch signal J of the keyboard and transmits the touch signal J to device 30 through communication circuit 16 as communication data H.

The communication circuit 33 in use device 30 includes a general-purpose connector for connecting the keyboard and the like, such as a USB, serial, radio, or infrared connector, and a communication circuit. The touch signal J from token 10 connected to communication circuit 33 is interpreted as if the signal were a touch signal transmitted from a keyboard that should originally be connected, and transmitted to processing unit 31, which interprets the signal transmitted from communication circuit 33 as a signal from the keyboard and executes processing corresponding to the key input.

When the state of device 30 is a password input receiving state in providing a service, and the touch signal J transmitted from token 10 represents a password corresponding to this user, unit 31 of device 30 interprets that the password is input from an externally connected keyboard. Unit 31 executes the service software A in storage circuit 32, thereby collating the input password as if it were a password input by the user through a keyboard. If it is authenticated that the password is correct, the service software A is executed to provide the service to the user.

As described above, in this authentication system, the signal from token 10 is the same as a password that is actually input by the user from a keyboard. Hence, processing unit 31 can authenticate the user by the same processing as the conventional password collation. For this reason, use device 30 needs to have no software dedicated for the authentication token. The service program (service software A) of device 30 need not be improved for the authentication token, either. That is, an authentication system based on biometrical information can easily be introduced without newly installing or changing software in a conventional system using a password.

When not only a password but also a user ID or the like is transmitted as user information, the convenience can be increased because no keyboard input is necessary in user authentication. In addition, since token 10 automatically transmits the user ID or password, the user need not memorize these pieces of information, so the convenience can further be increased. Simultaneously, a meaningless long password that the user cannot memorize can also individually be set for each service while being frequently updated. Problems in a conventional authentication system using a password that a character string easy to memorize is used as a password, or various services share one password without updating it can also be solved. Hence, a system with high security can be built.

New registration of user information and index in authentication token 10 or correction/addition of user information and index registered in token 10 can be done by transmitting registration user information B and registration index information G from device 30 having dedicated software to token 10. In this case, upon receiving registration user information B and registration index information G, the token 10 executes processing of, e.g. registering user information in the user memory 15 or updating the user information in user memory 15 on the basis of received registration user information B and registration index information G.

To do such processing, a use device having dedicated software is necessary. However, since this processing is not usual and is necessary only to change the user information, token 10 needs to be connected to a use device capable of this processing only at such time. Since this processing is very unusual as compared to normal authentication processing in providing a service, the convenience for the user is rarely decreased. In addition, even for a service for such user information and index information registration processing, instead of arbitrarily rewriting the user information and index information, only the user who is permitted to rewrite the user information is allowed to register the user information using a dedicated use device by introducing user authentication by biometrical information using authentication token 10. Hence, a system with higher safety can be built. In this embodiment, registration memory 13 for storing the registered biometrical information data of the user and memory 15 for storing biometrical information are separated. However, these memories may be integrated into one memory.

As described above, this authentication system is designed to assign a plurality of pieces of user information to each of a plurality of registered biometrical information data registered in memory 13 and be capable of identifying the plurality of pieces of assigned user information.

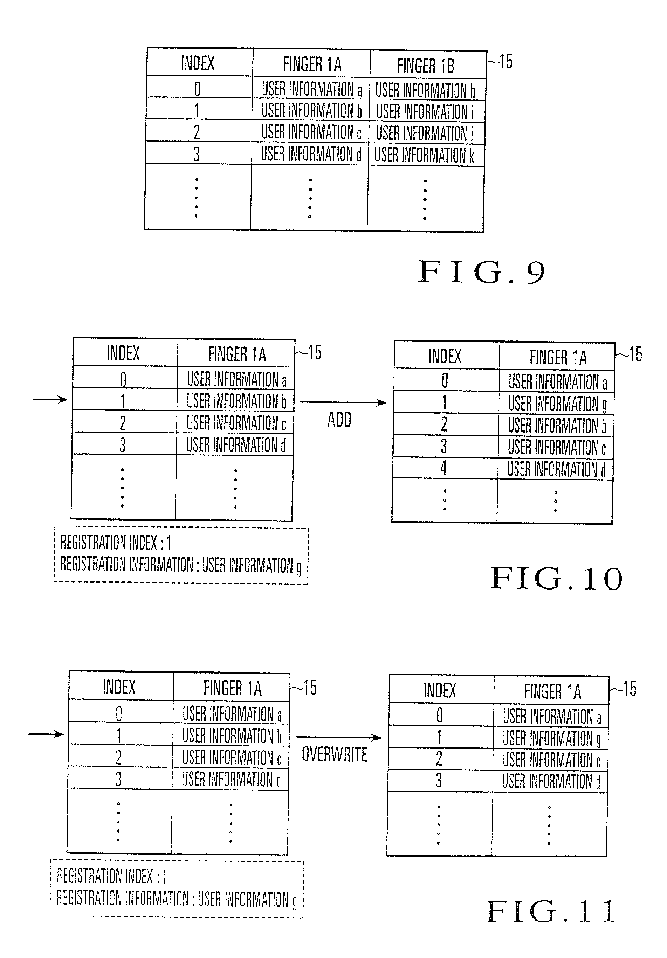

Assume that biometrical information is a fingerprint. In user memory 15, for example, a plurality of pieces of user information including pieces of user information a to d, pieces of user information h to k, and the like can be assigned to a finger 1A as the thumb, a finger 1B as the index finger, and the like, respectively, as shown in Fig. 9.

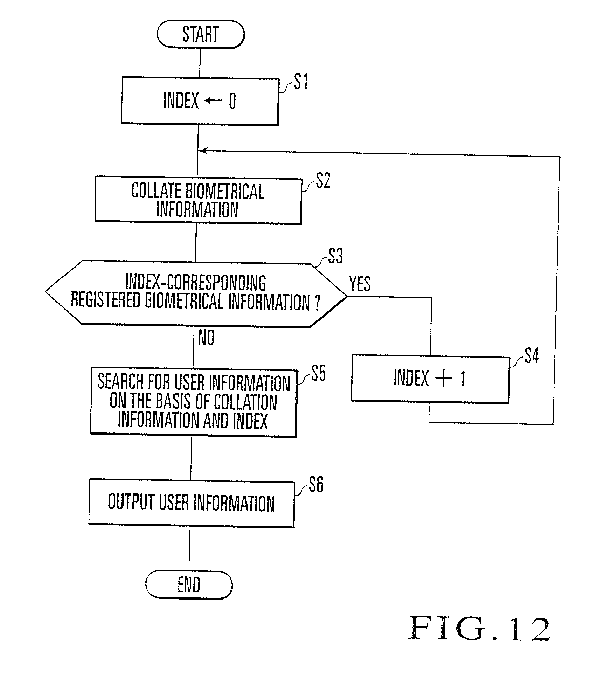

To register such user information, the registration index information G is added to the registration user information B transmitted from use device 30, and the user information is inserted and added to an arbitrary index portion of user memory 15, as shown in Fig. 10. Additionally, as shown in Fig. 11, an overwrite may be executed to rewrite user information at an arbitrary index portion of memory 15 to new user information to register user information of an arbitrary index of each registered biometrical information.

Fig. 12 shows the operation of this authentication system. The main operation of the 11th embodiment will be described in accordance with this flow chart.

Before the start of biometrical information collation, the value of index counter 21 is reset to "0" (step 31). Next, the user biometrical information is read by sensor 11. The circuit 12 collates the biometrical information read by sensor 11 with registered biometrical information in registration memory 13 and outputs the collation data F corresponding to coincident registered biometrical information (step S2).

In this embodiment, at least one of the plurality of pieces of registered biometrical information registered in memory 13 is index-corresponding registered biometrical information. When collation data F output from collation circuit 12 indicates the index-corresponding registered biometrical information (YES in step S3), circuit 12 outputs index addition signal K to index counter 21 to increment the value of index counter 21 by one (step S4). The processing returns to the read and collation of biometrical information again (step S2). When collation data F as collation result indicates previous index-corresponding registered biometrical information, circuit 12 also outputs index addition signal K to counter 21 to increment the value of counter 21 by one (steps S3 and S4). The flow returns to step S2 again to read and collate biometrical information.

As described above, every time sensor 11 reads biometrical information, circuit 12 collates the biometrical information with registered biometrical information in memory 13. In addition, when collation data F representing the collation result is index-corresponding registered biometrical information, circuit 12 outputs the index addition signal K to counter 21 to increment the value of counter 21 by one.

On the other hand, if the collation result by circuit 12 does not represent index-corresponding registered biometrical information (NO in step S3), user information in user memory 15 is searched for and specified in accordance with the collation data F that is output from collation circuit 12 on the basis of coincidence of collation and represents the type of registered biometrical information and index information I representing the value of counter 21 at that time (step S5). The specified user information is output to keyboard emulator 14 (step S6). Upon receiving the user information output from memory 15, emulator 14 converts the user information into touch signal J of the keyboard and transmits it to device 30 through communication circuit 16 as communication data H, as described above.

In the 11th embodiment, a plurality of pieces of user information can be assigned to each registered biometrical information (to, e.g., each finger if the information is a fingerprint). Hence, the number of user information to be registered and used can be increased. For example, when user information is a password corresponding to the service in device 30, and a new password is to be added to user memory 15 as user information, the user information is registered using "addition of user information". In this case, passwords before the latest password can also be held and output. Accordingly, even when new and old passwords need to be input on the password update window or the like of the service in use device 30, both the new and old passwords can be output using indices to cope with such a service.

The method of determining index-corresponding registered biometrical information in advance when the value of counter 21 is to be incremented has been described above. However, the value of counter 21 may be incremented in accordance with, e.g., the position of a body part such as a finger on sensor 11.

More specifically, as shown in Figs. 6A to 6C, the user places a finger on sensor 11 for reading a fingerprint in various directions. The collation circuit 12 detects the direction of the placed finger and increments the value of index counter 21 on the basis of the detection result.

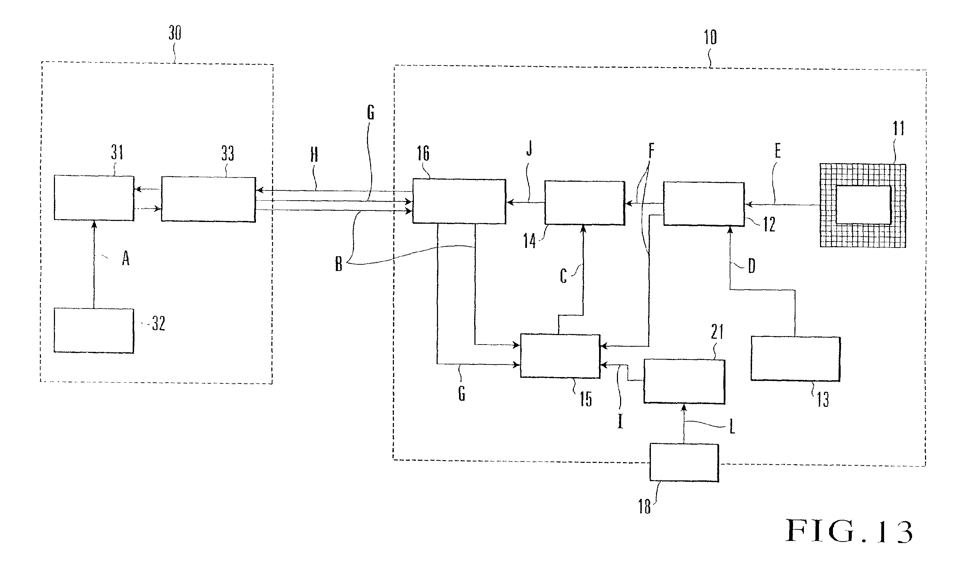

Alternatively, as shown in Fig. 13, a switch 18 or the like may be prepared on token 10 to increment the value of counter 21 in accordance with the number of times of pressing switch 18. In this case, no index addition signal K is output from circuit 12 to counter 21.

In the first to 11th embodiments, collation circuit 12, keyboard emulator 14, and communication circuit 16 are separately arranged in collation circuit 12. However, circuit 12 and emulator 14 may be integrated into one unit. Emulator 14 and circuit 16 may be integrated into one unit. The collation circuit 12, keyboard emulator 14, and communication circuit 16 may be integrated into one unit.

As has been described above, according to the present invention, a system is constructed by an authentication token of a user and a use device which provides a service to the user. The authentication token comprises a biometrical information sensor which reads user biometrical information, a registration memory which stores user registered biometrical information in advance, an authentication information output section capable of outputting at least user unique information, a collation circuit which collates the biometrical information read by the biometrical information sensor with the registered biometrical information in the registration memory and outputs a collation result, and a keyboard emulator. When the collation result from the collation circuit represents that collation has successfully been done, the keyboard emulator converts the user unique information from the authentication information output section into a keyboard touch signal. On the other hand, the use device executes a service program on the basis of the touch signal to provide the service to the user. Hence, an authentication system based on biometrical information can be introduced without installing dedicated software in a general use device already used by the user.

In addition, an authentication token comprises a biometrical information senor which reads user biometrical information, a registration memory which stores user registered biometrical information in advance, an authentication information output section capable of outputting a plurality of pieces of user unique information in correspondence with at least one registered biometrical information stored in registration memory 13 as specific registered biometrical information, and a collation section which collates the biometrical information read by the biometrical information sensor with the registered biometrical information in the registration memory and, when the collation result represents that collation has successfully been done, and the biometrical information to be collated is the specific registered biometrical information, causes the authentication information output section to selectively output one of a plurality of pieces of unique information corresponding to the specific registered biometrical information. The user unique information output from the authentication information output section is converted into a keyboard touch signal, and the converted touch signal is transmitted to a use device to cause it to execute a service program to provide the service to the user. Hence, an authentication system based on biometrical information can be introduced without installing dedicated software in a general use device already used by the user. In addition, since a plurality of pieces of user unique information can be assigned to each registered biometrical information, more pieces of user unique information can be used. For example, when user unique information is a password for the service provided by the use device, passwords before the latest password can also be held and output. Accordingly, even when new and old passwords need to be input on the password update window or the like of the service in the use device, both the new and old passwords can be output using indices.

## Claims

1. An authentication method **characterized by** comprising:
a first step of causing a biometrical information sensor to read biometrical information of a user;
a second step of collating the biometrical information read on the basis of processing of the first step with registered biometrical information in a registration memory, and when a collation result represents that collation has successfully been done, converting user unique information from an authentication information output section into an emulator signal corresponding to a service provided by a use device and transmitting the emulator signal to the use device; and
a third step of causing the use device to provide the service to the user on the basis of the emulator signal transmitted by processing of the second step.

2. A method according to claim 1, wherein
processing of the second step includes
a fourth step of collating the biometrical information read by the biometrical information sensor with the registered biometrical information in the registration memory and outputting the collation result, and
a fifth step of, when the collation result based on processing of the fourth step represents that collation has successfully been done, converting the user unique information from the authentication information output section into a keyboard touch signal and transmitting the touch signal to the use device as the emulator signal, and
processing of the third step includes processing of causing the use device to execute a service program on the basis of the touch signal transmitted by processing of the fifth step and provide the service to the user.

3. A method according to claim 2, further comprising
a sixth step of, when the use device is connected to an authentication token, transmitting to the use device a unique number of the authentication token, which is stored in a first memory of the authentication token, and
a seventh step of, when the unique number of the authentication token, which is transmitted on the basis of processing of the sixth step, is not registered in a second memory of the use device, refusing communication with the authentication token.

4. A method according to claim 2, further comprising
an eighth step of, when an authentication token is connected to the use device, transmitting to the authentication token a unique number of the use device, which is stored in a first memory of the use device, and
a ninth step of, when the unique number of the use device, which is transmitted on the basis of processing of the eighth step, is not registered in a second memory of the authentication token, refusing communication with the use device.

5. A method according to claim 2, wherein processing of the fourth step includes a 10th step of, when an instruction device instructs to start the collation, indicating a read period of the biometrical information on an indicator.

6. A method according to claim 2, wherein
the method further comprises an 11th step of encrypting and outputting information stored in a user memory which is arranged in the authentication information output section to store the user unique information, and
processing of the fifth step includes the 12th step of converting the encrypted user unique information into the keyboard touch signal.

7. A method according to claim 2, wherein processing of the fifth step includes a 13th step of converting a password from a password generation unit arranged in the authentication information output section into the keyboard touch signal as the user unique information.

8. A method according to claim 2, further comprising a 14th step of, when the collation result based on processing of the fourth step represents that collation has successfully been done, permitting access to a user memory which is arranged in the authentication information output section to store the user unique information.

9. A method according to claim 2, wherein
the method further comprises
a 15th step of storing in the registration memory a plurality of pieces of biometrical information of the user and a plurality of pieces of registered biometrical information corresponding to the plurality of pieces of biometrical information, and
a 16th step of storing a plurality of pieces of user unique information of the user in a user memory in correspondence with the plurality of pieces of registered biometrical information, the user memory being arranged as the authentication information output section,
processing of the fourth step includes a 17th step of collating the biometrical information read on the basis of processing of the first step with the plurality of pieces of registered biometrical information in the registration memory, and
processing of the fifth step includes an 18th step of converting into the keyboard touch signal the user unique information of the user corresponding to registered biometrical information when the collation result based on processing of the 17th step represents that collation has successfully been done.

10. A method according to claim 9, wherein
processing of the first step includes a 19th step of causing the biometrical information sensor to execute a read in correspondence with a direction of each body part of the user and output biometrical information,
processing of the 17th step includes a 20th step of collating the biometrical information output from the biometrical information sensor with the registered biometrical information in the registration memory, and
processing of the 18th step includes a 21st step of selecting unique information in the user memory, which corresponds to the direction of registered biometrical information when the collation result based on processing of the 20th step represents that collation has successfully been done.

11. A method according to claim 9, wherein
processing of the first step includes a 22nd step of causing the biometrical information sensor to sequentially read a plurality of body parts of the user and sequentially output different pieces of biometrical information,
processing of the 17th step includes a 23rd step of sequentially collating the biometrical information output from the biometrical information sensor with the registered biometrical information in the registration memory, and
processing of the 18th step includes a 24th step of selecting unique information in the user memory, which corresponds to an order of pieces of registered biometrical information for which collation has successfully been done when the collation result based on processing of the 23rd step represents that collation has successfully been done.

12. A method according to claim 2, wherein
the method further comprises
a 25th step of, when an instruction device instructs generation of a password, generating the password, storing the generated password in a user memory arranged in the authentication information output section as the user unique information, and outputting the generated password, and
processing of the fifth step includes a 26th step of converting the password output on the basis of processing of the 25th step into the keyboard touch signal.

13. A method according to claim 2, further comprising a 27th step of, upon receiving registration user unique information, causing the authentication token to update the user unique information in a user memory arranged in the authentication information output section to the registration user unique information.

14. A method according to claim 2, further comprising
a 28th step of registering in the registration memory specific registered biometrical information which makes it possible to output a plurality of pieces of unique information of the user from the authentication information output section, and
a 29th step of, when the collation result based on processing of the fourth step represents that collation has successfully been done, and the biometrical information to be collated is the specific registered biometrical information, selectively converting one of the plurality of pieces of unique information output from the authentication information output section in correspondence with the specific registered biometrical information into the keyboard touch signal.

15. A method according to claim 14, wherein
processing of the 28th step includes a 30th step of registering at least one specific registered piece of biometrical information in the registration memory and storing a plurality of pieces of user unique information identified by indices in a user memory in correspondence with the specific registered biometrical information, the user memory being arranged as the authentication information output section, and
processing of the 29th step includes
a 31st step of incrementing an index counter when the collation result based on processing of the fourth step represents that collation has successfully been done, and the biometrical information to be collated is predetermined registered biometrical information,
a 32nd step of, when the collation result based on processing of the fourth step represents that collation has successfully been done, and the biometrical information to be collated is not the predetermined registered biometrical information, searching the user memory to acquire corresponding user unique information on the basis of the registered biometrical information output as the collation result and a value of the index counter, and
a 33rd step of converting the user unique information acquired on the basis of processing of the 32nd step into the keyboard touch signal and transmitting the touch signal to the use device.

16. A method according to claim 14, wherein
processing of the 28th step includes a 34th step of registering at least one specific registered piece of biometrical information in the registration memory and storing a plurality of pieces of user unique information identified by indices in a user memory in correspondence with the specific registered biometrical information, the user memory being arranged as the authentication information output section, and
processing of the 29th step includes
a 35th step of incrementing an index counter every time a switch is pressed, and
a 36th step of, when the collation result based on processing of the fourth step represents that collation has successfully been done, and the biometrical information to be collated is the specific registered biometrical information, converting into the keyboard touch signal user unique information selectively output from the user memory on the basis of the specific registered biometrical information and a value of the index counter.

17. A method according to claim 14, wherein
processing of the 28th step includes a 37th step of registering at least one specific registered biometrical information in the registration memory and storing a plurality of pieces of user unique information identified by indices in a user memory in correspondence with the specific registered biometrical information, the user memory being arranged as the authentication information output section, and
the method further comprises a 38th step of, upon receiving registration user unique information and registration index information transmitted from the use device, updating user unique information in an area of the user memory identified by the registration index information to the registration user unique information or inserting the registration user unique information to the area.

18. An authentication system **characterized by** comprising:
an authentication token (10) owned by a user; and
a use device (30) which provides a service to the user,
wherein
said authentication token comprises
a biometrical information sensor (11) which reads biometrical information of the user,
a registration memory (13) which stores registered biometrical information of the user in advance,
an authentication information output section (15) capable of outputting at least the user unique information, and
an emulator section (12, 14, 16) which collates the biometrical information read by said biometrical information sensor with the registered biometrical information in said registration memory, and when a collation result represents that collation has successfully been done, converts user unique information from said authentication information output section into an emulator signal corresponding to the service provided by the use device and outputs the emulator signal, and
said use device comprises a processing unit (31) which provides the service to the user on the basis of the emulator signal output from said authentication token.

19. A system according to claim 18, wherein
said emulator section comprises
a collation section (12) which collates the biometrical information read by said biometrical information sensor with the registered biometrical information in said registration memory,
a keyboard emulator (14) which converts the user unique information from said authentication information output section into a keyboard touch signal when the collation result from said collation section represents that collation has successfully been done, and
a first communication circuit (16) which transmits the touch signal converted by said keyboard emulator,
said use device comprises
a second communication circuit (33) which receives the touch signal transmitted from said first communication circuit as the emulator signal and sends the received touch signal to said processing unit, and
said processing unit executes a service program on the basis of the touch signal from said second communication circuit to provide the service to the user.

20. A system according to claim 19, wherein
said first communication circuit has a first memory which stores a unique number of said authentication token,
said use device has a second memory which registers the unique number of said authentication token,
when said use device is connected to said authentication token, said first communication circuit transmits to said use device the unique number of said authentication token, which is stored in said first memory, and
when the unique number of said authentication token, which is received by said second communication circuit, is not registered in said second memory, said use device refuses communication with said authentication token.

21. A system according to claim 19, wherein
said second communication circuit has a first memory which stores a unique number of said use device,
said authentication token has a second memory which registers the unique number of said use device,
when said authentication token is connected to said use device, said second communication circuit transmits to said authentication token the unique number of said use device, which is stored in said first memory, and
when the unique number of said use device, which is received by said first communication circuit, is not registered in said second memory, said authentication token refuses communication with said use device.

22. A system according to claim 19, wherein
said authentication token comprises
an instruction device (18) which instructs said collation section to start the collation, and
an indicator (17) capable of indicating a biometrical information read period by said biometrical information sensor, and
when instructed by said instruction device to start the collation, said collation section indicates the biometrical information read period on said indicator.

23. A system according to claim 19, wherein
said authentication information output section comprises a user memory (15) which stores the user unique information, and
said authentication token has an encryption unit (19) which encrypts information stored in said user memory and outputs the encrypted information to said keyboard emulator.

24. A system according to claim 19, wherein
said authentication information output section comprises a password generation unit (20) which generates a password and outputs the password as the user unique information, and
said keyboard emulator converts the password from said password generation unit into the keyboard touch signal.

25. A system according to claim 19, wherein said authentication information output section comprises a user memory which stores the user unique information, and said user memory permits access from an external device when the collation result from said collation section represents that collation has successfully been done.

26. A system according to claim 19, wherein
said authentication information output section comprises a user memory which stores the user unique information,
said registration memory stores a plurality of pieces of registered biometrical information corresponding to a plurality of pieces of biometrical information of the user, and said user memory stores a plurality of pieces of unique information of the user in correspondence with the plurality of pieces of registered biometrical information,
said collation section collates the biometrical information read by said biometrical information sensor with the plurality of pieces of registered biometrical information in said registration memory, and
said keyboard emulator receives unique information in said user memory corresponding to registered biometrical information when the collation result from said collation section represents that collation has successfully been done and converts the unique information into the keyboard touch signal.

27. A system according to claim 26, wherein
said biometrical information sensor executes a read in correspondence with a direction of each body part of the user and outputs biometrical information,
said collation section collates the biometrical information output from said biometrical information sensor with the registered biometrical information in said registration memory, and
said keyboard emulator selects unique information in the user memory, which corresponds to the direction of said biometrical information when the collation result from said collation section represents that collation has successfully been done.

28. A system according to claim 26, wherein
said biometrical information sensor sequentially reads a plurality of body parts of the user and sequentially outputs different pieces of biometrical information,
said collation section sequentially collates the biometrical information output from said biometrical information sensor with the registered biometrical information in said registration memory, and
said keyboard emulator selects unique information in the user memory, which corresponds to an order of said pieces of biometrical information for which collation has successfully been done when the collation result from said collation section represents that collation has successfully been done.

29. A system according to claim 19, wherein
said authentication information output section comprises a user memory which stores the user unique information, and
said authentication token comprises
an instruction device (18) which instructs generation of a password, and
a password generation unit (20) which generates the password when instructed to generate the password by said instruction device, stores the password in said user memory as the user unique information, and outputs the password to said keyboard emulator.

30. A system according to claim 19, wherein
said authentication information output section comprises a user memory which stores the user unique information, and
said authentication token comprises update means for, upon receiving registration user unique information transmitted from said use device through said first communication circuit, updating the user unique information in said user memory to the registration user unique information.

31. A system according to claim 19, wherein
said authentication information output section can output a plurality of pieces of unique information of the user in correspondence with at least one piece of registered biometrical information stored in said registration memory as specific registered biometrical information, and
when the collation result between the biometrical information read by said biometrical information sensor and the registered biometrical information in said registration memory represents that collation has successfully been done, and the biometrical information to be collated is the specific registered biometrical information, said collation section causes said authentication information output section to selectively output to said keyboard emulator one of the plurality of pieces of unique information corresponding to the specific registered biometrical information.

32. A system according to claim 31, wherein
said authentication information output section comprises a user memory capable of storing a plurality of pieces of user unique information identified by indices in correspondence with at least one registered biometrical information stored in said registration memory as the specific registered biometrical information,
said collation section comprises
a collation circuit (12) which collates the biometrical information read by said biometrical information sensor with the registered biometrical information in said registration memory and outputs the collation result, and when the biometrical information to be collated is predetermined registered biometrical information, outputs an index addition signal, and
an index counter (21) which is incremented on the basis of the index addition signal, and
said keyboard emulator converts, into the keyboard touch signal, the user unique information selectively output from said user memory on the basis of a value of said index counter and the specific registered biometrical information output from said collation circuit as the collation result.

33. A system according to claim 31, wherein
said authentication information output section comprises a user memory capable of storing a plurality of pieces of user unique information identified by indices in correspondence with at least one piece of registered biometrical information stored in said registration memory as the specific registered biometrical information,
said collation section comprises
a collation circuit (12) which collates the biometrical information read by said biometrical information sensor with the registered biometrical information in said registration memory and outputs the collation result,
a switch (18), and
an index counter (21) which increments the number of pressing said switch, and
said keyboard emulator converts, into the keyboard touch signal, the user unique information selectively output from said user memory on the basis of a value of said index counter and the specific registered biometrical information output from said collation circuit as the collation result.

34. A system according to claim 31, wherein
said authentication information output section comprises a user memory capable of storing a plurality of pieces of user unique information identified by indices in correspondence with at least one piece of registered biometrical information stored in said registration memory as the specific registered biometrical information, and
said authentication token comprises registration means for, upon receiving registration user unique information and registration index information transmitted from said use device through said first communication circuit, updating user unique information in an area of said user memory identified by the registration index information to the registration user unique information or inserting the registration user unique information to the area.

35. An authentication token **characterized by** comprising:
a biometrical information sensor which reads biometrical information of a user,
a registration memory which stores registered biometrical information of the user in advance,
an authentication information output section capable of outputting at least the user unique information, and
an emulator section which collates the biometrical information read by said biometrical information sensor with the registered biometrical information in said registration memory, and when a collation result represents that collation has successfully been done, converts user unique information from said authentication information output section into an emulator signal corresponding to a service provided by a use device and outputs the emulator signal to the use device to cause the use device to provide the service.

36. A token according to claim 35, wherein
said emulator section comprises
a collation section which collates the biometrical information read by said biometrical information sensor with the registered biometrical information in said registration memory,
a keyboard emulator which converts the user unique information from said authentication information output section into a keyboard touch signal when the collation result from said collation section represents that collation has successfully been done, and
a communication circuit which transmits the touch signal converted by said keyboard emulator to the use device as the emulator signal.

37. A token according to claim 36, wherein
said communication circuit has a first memory which stores a unique number of said authentication token, and
when the use device is connected to said authentication token, said communication circuit transmits to the use device the unique number of said authentication token, which is stored in said first memory.

38. A token according to claim 36, wherein
said authentication token further comprises a second memory which registers a unique number of the use device, and
when said authentication token is connected to the use device, and the unique number of the use device transmitted from the use device is received by said communication circuit, and if the received unique number of the use device is not registered in said second memory, communication with the use device is refused.

39. A token according to claim 36, wherein
said authentication token comprises
an instruction device which instructs said collation section to start the collation, and
an indicator capable of indicating a biometrical information read period by said biometrical information sensor, and
when instructed by said instruction device to start the collation, said collation section indicates the biometrical information read period on said indicator.

40. A token according to claim 36, wherein
said authentication information output section comprises a user memory which stores the user unique information, and
said authentication token has an encryption unit which encrypts information stored in said user memory and outputs the encrypted information to said keyboard emulator.

41. A token according to claim 36, wherein
said authentication information output section comprises a password generation unit which generates a password and outputs the password as the user unique information, and
said keyboard emulator converts the password from said password generation unit into the keyboard touch signal.

42. A token according to claim 36, wherein said authentication information output section comprises a user memory which stores the user unique information, and said user memory permits access from an external device when the collation result from said collation section represents that collation has successfully been done.

43. A token according to claim 36, wherein
said authentication information output section comprises a user memory which stores the user unique information,
said registration memory stores a plurality of pieces of registered biometrical information corresponding to a plurality of pieces of biometrical information of the user, and said user memory stores a plurality of pieces of unique information of the user in correspondence with the plurality of pieces of registered biometrical information,
said collation section collates the biometrical information read by said biometrical information sensor with the plurality of pieces of registered biometrical information in said registration memory, and
said keyboard emulator receives unique information in said user memory corresponding to said biometrical information when the collation result from said collation section represents that collation has successfully been done and converts the unique information into the keyboard touch signal.

44. A token according to claim 43, wherein
said biometrical information sensor executes a read in correspondence with a direction of each body part of the user and outputs biometrical information,
said collation section collates the biometrical information output from said biometrical information sensor with the registered biometrical information in said registration memory, and
said keyboard emulator selects unique information in the user memory, which corresponds to the direction of said biometrical information when the collation result from said collation section represents that collation has successfully been done.

45. A token according to claim 43, wherein
said biometrical information sensor sequentially reads a plurality of body parts of the user and sequentially outputs different pieces of biometrical information,
said collation section sequentially collates the biometrical information output from said biometrical information sensor with the registered biometrical information in said registration memory, and
said keyboard emulator selects unique information in the user memory, which corresponds to an order of said pieces of biometrical information for which collation has successfully been done when the collation result from said collation section represents that collation has successfully been done.

46. A token according to claim 36, wherein
said authentication information output section comprises a user memory which stores the user unique information, and
said authentication token comprises
an instruction device which instructs generation of a password, and
a password generation unit which generates the password when instructed to generate the password by said instruction device, stores the password in said user memory as the user unique information, and outputs the password to said keyboard emulator.

47. A token according to claim 36, wherein
said authentication information output section comprises a user memory which stores the user unique information, and
said authentication token comprises update means for, upon receiving registration user unique information transmitted from the use device through said communication circuit, updating the user unique information in said user memory to the registration user unique information.

48. A token according to claim 36, wherein
said authentication information output section can output a plurality of pieces of unique information of the user in correspondence with at least one piece of registered biometrical information stored in said registration memory as specific registered biometrical information, and
said collation section collates the biometrical information read by said biometrical information sensor with the registered biometrical information in said registration memory, and when the collation result represents that collation has successfully been done, and the biometrical information to be collated is the specific registered biometrical information, causes said authentication information output section to selectively output to said keyboard emulator one of the plurality of pieces of unique information corresponding to the specific registered biometrical information.

49. A token according to claim 48, wherein
said authentication information output section comprises a user memory capable of storing a plurality of pieces of user unique information identified by indices in correspondence with at least one piece of registered biometrical information stored in said registration memory as the specific registered biometrical information,
said collation section comprises
a collation circuit which collates the biometrical information read by said biometrical information sensor with the registered biometrical information in said registration memory and outputs the collation result, and when the biometrical information to be collated is predetermined registered biometrical information, outputs an index addition signal, and
an index counter which is incremented on the basis of the index addition signal, and
said keyboard emulator converts, into the keyboard touch signal, the user unique information selectively output from said user memory on the basis of a value of said index counter and the specific registered biometrical information output from said collation circuit as the collation result.

50. A token according to claim 48, wherein
said authentication information output section comprises a user memory capable of storing a plurality of pieces of user unique information identified by indices in correspondence with at least one piece of registered biometrical information stored in said registration memory as the specific registered biometrical information,
said collation section comprises
a collation circuit which collates the biometrical information read by said biometrical information sensor with the registered biometrical information in said registration memory and outputs the collation result,
a switch, and
an index counter which increments the number of pressing said switch, and
said keyboard emulator converts, into the keyboard touch signal, the user unique information selectively output from said user memory on the basis of a value of said index counter and the specific registered biometrical information output from said collation circuit as the collation result.

51. A token according to claim 48, wherein
said authentication information output section comprises a user memory capable of storing a plurality of pieces of user unique information identified by indices in correspondence with at least one piece of registered biometrical information stored in said registration memory as the specific registered biometrical information, and
said authentication token comprises registration means for, upon receiving registration user unique information and registration index information transmitted from said use device through said communication circuit, updating user unique information in an area of said user memory identified by the registration index information to the registration user unique information or inserting the registration user unique information to the area.
